# EUROPÄISCHE PATENTSCHRIFT

(11) **EP 3 526 287 B1**
(45) Veröffentlichungstag und Bekanntmachung des Hinweises auf die Patenterteilung: **16.11.2022**
(21) Anmeldenummer: 17790973.6
(22) Anmeldetag: 09.10.2017
(51) Int. Cl.: C08L 27/18, F16J 1/01, F16J 9/28, C08K 3/00

(54) **DICHTELEMENT UND/ODER FÜHRUNGSRING AUS EINER ZUSAMMENSETZUNG AUS POLYTETRAFLUORETHYLEN, PERFLUORALKOXYPOLYMER UND FÜLLSTOFF**
SEALING ELEMENT AND/OR CONDUCTION RING MADE OF A COMPOSITION OF POLYTETRAFLUOROETHYLENE, PERFLUORALKOXY POLYMER AND FILLER
ELÉMENT D'ÉTANCHÉITÉ ET / OU ANNEAU DE CONDUCTION PRÉPARÉS À PARTIR DE COMPOSITIONS DE POLYTÉTRAFLUOROÉTHYLÈNE, DE POLYMÈRES PERFLUOROALCOXY ET UNE CHARGE

(30) Priorität: 17.10.2016 EP 16194090
(43) Veröffentlichungstag der Anmeldung: 21.08.2019
(73) Patentinhaber: Burckhardt Compression AG, 8404 Winterthur (CH)
(72) Erfinder: THURNHERR, Bernhard Dominik, 8180 Bülach (CH)
(74) Vertreter: Hepp Wenger Ryffel AG
(86) Internationale Anmeldenummer: PCT/EP2017/075615
(87) Internationale Veröffentlichungsnummer: WO 2018/073033

(56) Entgegenhaltungen:
- EP-A1- 0 026 806
- EP-A1- 0 933 566
- EP-A2- 0 938 970
- WO-A1-97/20881

## Beschreibung

Die vorliegende Erfindung betrifft ein Dichtelement und/oder einen Führungsring gefertigt aus einer Zusammensetzung auf der Basis von Polytetrafluorethylen sowie ein Verfahren zur Herstellung eines solchen Dichtelements bzw. Führungsrings.

Dichtelemente, wie Kolben- oder Packungsringe sowie Führungsringe, wie Kolbenführungsringe sowie Führungsdichtringe wie Kolbenführungsdichtringe müssen eine Vielzahl von Anforderungen erfüllen, um ihre Aufgabe zu erfüllen. Insbesondere müssen diese eine geeignete Härte, eine ausreichend hohe Zugfestigkeit, eine ausreichend hohe Reißdehnung, ein gutes Formanpassungsvermögen, eine hohe Alterungsbeständigkeit, geringe Druckkriech- und Kaltflussneigung, eine hervorragende chemische Beständigkeit, eine exzellente Temperaturbeständigkeit und je nach Anwendung ggf. eine hohe Ozonbeständigkeit aufweisen. Beispielsweise ist ein gutes Formanpassungsvermögen erforderlich, um die Funktion des Dichtelementes sicherzustellen, selbst wenn sich dieses bewegt. Zudem sind eine geringe Druckkriech- und Kaltflussneigung wesentlich, um eine irreversible plastische Verformung im kalten Zustand unter Belastung auch nach langer Betriebsdauer zu vermeiden.

Aufgrund dessen guten Eigenschaften werden Dichtelemente vermehrt aus Zusammensetzungen auf Basis von Polytetrafluorethylen (PTFE) hergestellt. PTFE zeichnet sich beispielsweise durch einen außergewöhnlich breiten thermischen Anwendungsbereich aus, ist nahezu universell chemisch beständig und weist eine hervorragende Beständigkeit gegen Licht, Witterung und Heißwasserdampf auf. Zudem zeichnet sich PTFE durch sehr gute Gleiteigenschaften, ein hervorragendes antiadhäsives Verhalten, durch gute elektrische und durch gute dielektrische Eigenschaften aus. Zudem ist es physiologisch unbedenklich. Allerdings ist PTFE durch eine vergleichsweise geringe mechanische Stabilität und insbesondere auch durch schlechte Kaltflusseigenschaften, nämlich hohen Kaltfluss, gekennzeichnet.

Aufgrund dessen vergleichsweise geringen mechanischen Stabilität werden Dichtungen nicht aus reinem PTFE hergestellt, sondern aus Zusammensetzungen, die neben PTFE noch geeignete anorganische und/oder organische Füllstoffe enthalten, wie Graphit, Carbonfasern und andere. Abgesehen von einer Verbesserung der mechanischen Eigenschaften, führt der Zusatz von Füllstoff auch zu einer Erhöhung der Verschleißbeständigkeit des aus der Zusammensetzung hergestellten Dichtelementes. Zudem führt der Zusatz von Füllstoff auch zu einer, zumindest geringfügigen, Verbesserung der Kaltflusseigenschaften, indem der Kaltfluss der Zusammensetzung bzw. der daraus hergestellten Dichtelemente verringert wird. Allerdings weisen Dichtelemente auf Basis füllstoffhaltiger PTFE-Zusammensetzungen immer noch eine zu hohe Druckkriechund Kaltflussneigung auf, weswegen solche Dichtelemente auf Anwendungen mit niedrigen bis mittleren Druckdifferenzen begrenzt sind. Für Kolbenringe, Führungsringe und Packungsringe sind jedoch bessere Druckkriech- und Kaltflusseigenschaften wünschenswert, welche die Verwendung der entsprechenden Dichtringe bei höheren Druckdifferenzen erlaubt. Eine weitere Eigenschaft von PTFE ist dessen vergleichsweise hohe Schmelzviskosität, welche bewirkt, dass PTFE im geschmolzenen Zustand nicht flüssig, sondern gelförmig ist, so dass PTFE nicht thermoplastisch verarbeitet werden kann, sondern nur mit Press- und Sintertechniken und Ram-Extrusion.

Zur Verbesserung der Kaltflusseigenschaften ist es bereits in der EP 0 933 566 A1 vorgeschlagen worden, PTFE durch ein Perfluoralkoxypolymer (PFA) zu ersetzen. Im Unterschied zu PTFE weist PFA Seitenketten auf, nämlich Alkoxyseitenketten, durch welche die Kaltflussneigung im Vergleich zu PTFE verringert wird, weil die PFA-Moleküle aufgrund der Seitenketten nur schwerer aneinander vorbei gleiten können als die linearen PTFE-Moleküle. PFA weist eine vergleichsweise niedrige Schmelzviskosität auf und lässt sich nicht mehr formfrei sintern.

Ausgehend davon liegt der vorliegenden Erfindung die Aufgabe zugrunde, ein Dichtelement und/oder einen Führungsring aus einer Zusammensetzung bereitzustellen, welche verbesserte Druckkriechund Kaltflusseigenschaften aufweist und somit bei höheren Druckdifferenzen einsetzbar ist, welche sich aber dennoch durch eine hervorragend hohe Chemikalien- und Temperaturbeständigkeit auszeichnet und formfrei gesintert werden kann.

Diese Aufgabe wird erfindungsgemäß gelöst durch ein Verfahren zur Herstellung eines Dichtelements und/oder Führungsrings, umfassend die Schritte:
a) Bereitstellen einer Zusammensetzung bestehend aus:
   i) 50 bis 98 Gew.-% Polytetrafluorethylen (PTFE) und/oder chemisch modifiziertes Polytetrafluorethylen,
   ii) 1 bis 49 Gew.-% Perfluoralkoxypolymer (PFA) und
   iii) 1 bis 49 Gew.-% eines anorganischen Füllstoffes ausgewählt aus der Gruppe umfassend Kohle, Graphit, Glasfasern, Carbonfasern, Molybdändisulfid, Metalle wie Kupfer, Legierungen wie Bronze, keramische Partikel wie Aluminiumoxid und beliebige Mischungen von zwei oder mehr der vorgenannten Substanzen, und
   iv) 0 bis 25 Gew.-% eines Polymers ausgewählt aus der Gruppe bestehend aus Polyphenylensulfiden (PPS), Polyphenylensulfonen (PPSO2), Polyetheretherketonen (PEEK), Polyimiden und beliebigen Mischungen von zwei oder mehr der vorgenannten Substanzen;
b) Formen und Sintern der in dem Schritt a) bereitgestellten Zusammensetzung zu einem Rohformling; und
c) Mechanische Bearbeitung des in dem Schritt b) bereitgestellten Rohformlings zu dem Dichtelement oder Führungsring.

Diese Lösung beruht auf der überraschenden Erkenntnis, dass durch Zugabe von vergleichsweise geringen Mengen von PFA zu einer PTFE oder chemisch modifizierten PTFE und Füllstoff enthaltenden Zusammensetzung die Druckkriech- und Kaltflusseigenschaften der Zusammensetzung signifikant verbessert werden können und diese somit bei höheren Druckdifferenzen eingesetzt werden können, und zwar besonders überraschend, ohne die anderen vorteilhaften Eigenschaften bekannter Zusammensetzungen auf Basis von PTFE oder modifiziertem PTFE und Füllstoff, wie hohe Chemikalien- und Temperaturbeständigkeit, zu verschlechtern, und gleichzeitig die Verarbeitung durch formfreies Sintern gewährleisten zu können. Abgesehen davon erlaubt die im Vergleich zu PTFE verbesserte Mikroporosität von PFA eine bessere Anbindung von insbesondere anorganischen Füllstoffen an den Polymeranteil der Zusammensetzung, wodurch die anwendungstechnischen Eigenschaften der Zusammensetzung weiter verbessert werden. Somit fungiert das PFA gewissermaßen als Haftvermittler zwischen dem Füllstoff und dem PTFE. Aufgrund all dieser Eigenschaften eignet sich die Zusammensetzung hervorragend als Material für die erfindungsgemäßen Dichtelemente wie Kolbenringe oder Packungsringe sowie Führungsringe wie Kolbenführungsringe, sowie Führungsdichtringe wie Kolbenführungsdichtringe. Solche Dichtelemente und/oder Führungsringe werden insbesondere bei Kolbenkompressoren verwendet, insbesondere zum Abdichten und/oder Führen des Kolbens oder der Kolbenstange. Solche Kolbenkompressoren werden zum Verdichten von Gasen verwendet.

Unter chemisch modifiziertem Polytetrafluorethylen wird im Sinne der vorliegenden Erfindung ein Polymer verstanden, welches aus Tetrafluorethylenmonomer und weniger als 1 Gew-% Comonomer und bevorzugt 0.1-0.2 Gew-% Comonomer, wie beispielsweise Perfluoralkoxyvinylether, zusammengesetzt ist. Da der Comonomer-Gehalt unter 1 Gew-% liegt, kann modifiziertes PTFE nach DIN EN ISO 12086 als Homopolymer eingestuft werden. Hingegen wird unter Perfluoralkoxypolymer ein Copolymer aus Tetrafluorethylen und Perfluoralkoxycomonomer verstanden, welches mehr als 1 Gew-% Perfluoralkoxycomonomer und bevorzugt 1,5 bis 5 Gew-% und besonders bevorzugt 1,5 bis 2 Gew-% Perfluoralkoxycomonomer enthält.

Um die mit der vorliegenden Erfindung erreichbaren vorteilhaften Eigenschaften in besonders hohem Ausmaß zu erreichen, wird es in Weiterbildung des Erfindungsgedankens vorgeschlagen, dass die Zusammensetzung des Dichtelements und/oder Führungsrings zu100 Gew.-% aus den Bestandteilen i), ii) und iii) besteht. Sofern die Summe der Bestandteile i), ii) und iii) weniger als 100 Gew.-% beträgt, enthält die Zusammensetzung als Rest auf 100 Gew.-% ein oder mehrere weitere Polymere, die bevorzugt aus der Gruppe ausgewählt sind, die aus Polyphenylensulfiden (PPS), Polyphenylensulfonen (PPSO2), Polyetheretherketonen (PEEK), Polyimiden und beliebigen Mischungen von zwei oder mehr der vorgenannten Polymeren besteht. Besonders gute Ergebnisse werden insbesondere im Hinblick auf die Verarbeitbarkeit sowie die Drucckriech- und Kaltflusseigenschaften erhalten, wenn die Zusammensetzung zu 75 bis 100 Gew.-% und höchst bevorzugt vollständig aus den Bestandteilen i), ii) und iii) besteht, wobei der Rest auf 100 Gew.-%, falls die Summe der Bestandteile i), ii) und iii), weniger als 100 Gew.-% beträgt, ein oder mehrere Polymere sind, die bevorzugt aus der Gruppe ausgewählt sind, die aus Polyphenylensulfiden (PPS), Polyphenylensulfonen (PPSO2), Polyetheretherketonen (PEEK), Polyimiden und beliebigen Mischungen von zwei oder mehr der vorgenannten Substanzen besteht.

Gemäß einer besonders bevorzugten Ausführungsform der vorliegenden Erfindung besteht die Zusammensetzung des Dichtelements und/oder Führungsrings aus:
i) 50 bis 93 Gew.-% Polytetrafluorethylen und/oder chemisch modifiziertem Polytetrafluorethylen,
ii) 5 bis 30 Gew.-% und besonders bevorzugt 5 bis 25 Gew.-% Perfluoralkoxypolymer und
iii) 2 bis 49 Gew.-% eines anorganischen Füllstoffes ausgewählt aus der Gruppe umfassend Kohle, Graphit, Glasfasern, Carbonfasern, Molybdändisulfid, Metalle wie Kupfer, Legierungen wie Bronze, keramischen Partikeln wie Aluminiumoxid und beliebige Mischungen von zwei oder mehr der vorgenannten Substanzen.

Mithin beträgt bei dieser Ausführungsform die Summe der Bestandteile i), ii) und iii) 100 Gew.-%. Eine solche Zusammensetzung ist nicht nur besonders gut verarbeitbar, insbesondere durch formfreies Sintern, sondern zeichnet sich insbesondere auch durch hervorragende Druckkriech- und Kaltflusseigenschaften sowie in gutem Ausmaß auch durch die weiteren für Dichtelemente wichtigen Eigenschaften aus.

Im Hinblick auf die vorgenannten Vorteile und Eigenschaften ist es ganz besonders bevorzugt, dass die Zusammensetzung des Dichtelements und/oder Führungsrings besteht aus:
i) 50 bis 93 Gew.-% Polytetrafluorethylen und/oder chemisch modifiziertem Polytetrafluorethylen,
ii) 5 bis 15 Gew.-% Perfluoralkoxypolymer und
iii) 2 bis 30 Gew.-% eines anorganischen Füllstoffes ausgewählt aus der Gruppe umfassend Kohle, Graphit, Glasfasern, Carbonfasern, Molybdändisulfid, Metalle wie Kupfer, Legierungen wie Bronze, keramischen Partikeln wie Aluminiumoxid und beliebige Mischungen von zwei oder mehr der vorgenannten Substanzen.

Grundsätzlich ist die vorliegende Erfindung bezüglich der Art von dem eingesetzten PTFE i) nicht besonders beschränkt. Insbesondere im Hinblick auf die Chemikalien- und Temperaturbeständigkeit sowie die Dichtigkeit ist es jedoch bevorzugt, dass die Zusammensetzung als Bestandteil i) hochmolekulares Polytetrafluorethylen und/oder chemisch modifiziertes Polytetrafluorethylen mit einem zahlengemittelten Molekulargewicht Mn von grösser als 10⁶ g/mol und einer ersten Schmelztemperatur (Tm) von 335°C oder höher enthält.

Bevorzugt handelt es sich bei dem PTFE um granulares PTFE, welches durch Suspensionspolymerisation erhalten worden ist.

Ferner hat es sich als vorteilhaft erwiesen, PTFE und/oder chemisch modifiziertes PTFE mit einer gemäß der DIN ISO 13320 gemessenen durchschnittlichen Partikelgröße von 20 bis 650 µm und besonders bevorzugt von 20 bis 50 µm einzusetzen.

Als Bestandteil ii) wird bevorzugt ein Perfluoralkoxypolymer (PFA) mit der folgenden allgemeinen Formel eingesetzt: 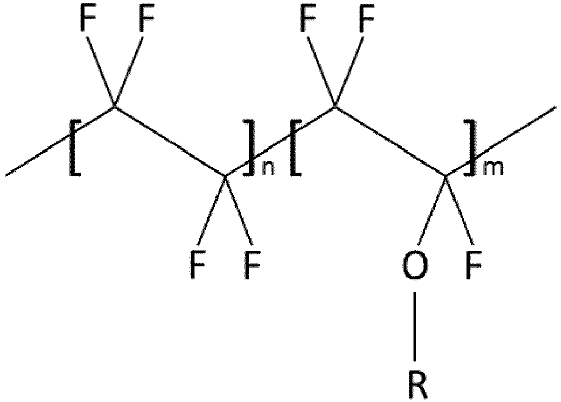 worin R ein C1-4-Perfluoralkylrest und bevorzugt ein C1-3-Perfluoralkylrest ist und m und n die Anzahl der Wiederholungseinheiten wiedergibt. Vorzugsweise sind n und m unabhängig voneinander eine Zahl zwischen 1 und 10000. Derartige PFA'e führen nicht nur zu einer besonders ausgeprägten Verbesserung der Druckkriech- und Kaltflusseigenschaften der aus der Zusammensetzung hergestellten Gegenstände, wie insbesondere Dichtelemente, sondern auch zu einer hohen Chemikalien- und Temperaturbeständigkeit sowie zu einer guten Verarbeitbarkeit durch formfreies Sintern.

Vorzugsweise weist das Perfluoralkoxypolymer ii) einen gemäß der DIN EN ISO 1133 mit 5 kg bei 372° gemessenen Schmelzflussindex von 1 bis 30 g/10 min und bevorzugt einen Schmelzflussindex von 2 bis 20 g/10 min auf.

Ferner hat es sich als vorteilhaft erwiesen, PFA mit einer gemäß der DIN ISO 13320 gemessenen durchschnittlichen Partikelgröße von 20 bis 650 µm und besonders bevorzugt von 20 bis 50 µm einzusetzen.

Aufgrund der vorteilhaften Eigenschaften der Zusammensetzung handelt es sich bei dem erfindungsgemäßen Dichtelement bevorzugt um einen Kolbenring oder einen Packungsring sowie einen Führungsring.

Ein weiterer Gegenstand der vorliegenden Erfindung ist ein Verfahren zur Herstellung eines zuvor beschriebenen Dichtelementes und/oder Führungsrings, welches die nachfolgenden Schritte umfasst:
a) Bereitstellen einer zuvor beschriebenen Zusammensetzung,
b) Formen und Sintern der in dem Schritt a) bereitgestellten Zusammensetzung zu einem Rohformling,
c) mechanische Bearbeitung des in dem Schritt b) bereitgestellten Rohformlings zu dem Dichtelement.

Dabei kann das Formen und Sintern in dem Schritt b) in zwei verschiedenen, nacheinander durchgeführten Verfahrensschritten oder gleichzeitig durchgeführt werden.

Vorzugsweise erfolgt das Formen und Sintern in dem Schritt b) i) durch Pressen der Zusammensetzung zu einem Grünling und anschließendes Sintern zu einem Rohformling, ii) durch Drucksintern oder iii) durch RAM-Extrusion.

Schließlich betrifft die vorliegende Erfindung einen Kolbenkompressor, der wenigstens ein zuvor beschriebenes Dichtelement und/oder einen zuvor beschriebenen Führungsring enthält.

Nachfolgend wird die vorliegende Erfindung anhand eines Ausführungsbeispiels beschrieben, welches die Erfindung erläutert, aber nicht beschränkt.

### Beispiel 1

Durch Vermischen wurde folgende Zusammensetzung hergestellt:
70 Gew.-% DuPont^{™} Teflon ^{®} PTFE 7A X,
5 Gew.-% PFA mit einem Schmelzflussindex von 10-17 g/10 min,
21 Gew.-% Kohlepulver mit einer Partikelgrößenverteilung von D90=40 µm und einer BET-Oberfläche von 10 m^{2̅}/g und
4 Gew.-% Graphit mit einer Partikelgrößenverteilung von D90=56 µm und einer BET-Oberfläche von 7 m^{2̅}/g.

Diese Zusammensetzung wurde durch formfreies Sintern zu einem Hohlzylinder verarbeitet, und zwar indem die Zusammensetzung zunächst bei Raumtemperatur zu einem Hohlzylinder als Grünling mit einem Innendurchmesser von 40 mm, mit einem Außendurchmesser von 80 mm und mit einer Höhe von 175 mm, gepresst wurde, bevor der so erhaltene Gründling in einem Ofen bei einer Temperatur von 375°C zu einem Rohformling gesintert wurde.

Anschließend wurde dieser Rohformling durch zerspanende Bearbeitung mechanisch zu Packungsringen mit einem Innendurchmesser von 50 mm, mit einem Außendurchmesser von 74 mm und mit einer Höhe von 4 mm verarbeitet.

Die so hergestellten Packungsringe zeichneten sich durch hervorragende Druckkriech- und Kaltflusseigenschaften aus.

### Beispiel 2

Analog zu Beispiel 1 wurden vier verschiedene Hohlzylinder aus einer Zusammensetzung hergestellt, die 0 Gew-%, 5 Gew-%, 10 Gew% bzw. 15 Gew-% PFA, 21 Gew.-% Kohlepulver, 4 Gew.-% Graphit und Rest auf 100 Gew.-% PTFE enthielten.

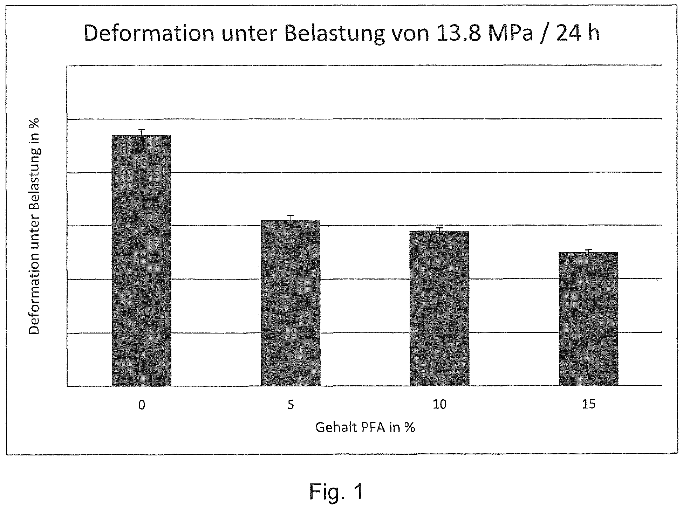

Von diesen 4 Formkörpern wurde die Deformation unter Belastung von 13,8 MPa innerhalb 24 Stunden gemessen. Die Ergebnisse sind in der Figur 1 dargestellt und zeigen, dass bereits der Zusatz von 5 Gew.-% PFA zu einer signifikanten Verringerung der Deformation unter Belastung führt und eine Erhöhung des PFA-Anteils einen geringeren Einfluss hierauf hat.

## Patentansprüche

1. Verfahren zur Herstellung eines Dichtelements und/oder Führungsrings, umfassend die Schritte:
a) Bereitstellen einer Zusammensetzung bestehend aus:
i) 50 bis 98 Gew.-% Polytetrafluorethylen und/oder chemisch modifiziertem Polytetrafluorethylen,
ii) 1 bis 49 Gew.-% Perfluoralkoxypolymer,
iii) 1 bis 49 Gew.-% eines anorganischen Füllstoffes ausgewählt aus der Gruppe bestehend aus Kohle, Graphit, Glasfasern, Carbonfasern, Molybdändisulfid, Metallen, Legierungen, keramischen Partikeln und beliebigen Mischungen von zwei oder mehr der vorgenannten Substanzen, und
iv) 0 bis 25 Gew.-% eines Polymers ausgewählt aus der Gruppe bestehend aus Polyphenylensulfiden (PPS), Polyphenylensulfonen (PPSO2), Polyetheretherketonen (PEEK), Polyimiden und beliebigen Mischungen von zwei oder mehr der vorgenannten Substanzen,
wobei das optional enthaltene chemisch modifizierte Polytetrafluorethylen ein Polymer ist, welches aus Tetrafluorethylenmonomer und weniger als 1 Gew-% Comonomer zusammengesetzt ist, und wobei das Perfluoralkoxypolymer ein Copolymer aus Tetrafluorethylen und Perfluoralkoxycomonomer ist, welches mehr als 1 Gew-% Perfluoralkoxycomonomer enthält;
b) Formen und Sintern der in dem Schritt a) bereitgestellten Zusammensetzung zu einem Rohformling,
c) mechanische Bearbeitung des in dem Schritt b) bereitgestellten Rohformlings zu dem Dichtelement und/oder Führungsring.

2. Verfahren nach Anspruch 1, **dadurch gekennzeichnet, dass** die Zusammensetzung als anorganischen Füllstoff Kupfer oder Bronze enthält.

3. Verfahren nach Anspruch 1 oder 2, **dadurch gekennzeichnet, dass** das Polytetrafluorethylen und/oder chemisch modifizierte Polytetrafluorethylen i) ein zahlengemitteltes Molekulargewicht von 10⁶ g/mol oder grösser aufweist.

4. Verfahren nach zumindest einem der vorstehenden Ansprüche, **dadurch gekennzeichnet, dass** das Polytetrafluorethylen und/oder chemisch modifizierte Polytetrafluorethylen i) eine gemäß DIN ISO 13320 gemessene durchschnittliche Partikelgröße von 20 bis 650 µm und bevorzugt von 20 bis 50 µm aufweist.

5. Verfahren nach zumindest einem der vorstehenden Ansprüche, **dadurch gekennzeichnet, dass** das Perfluoralkoxypolymer ii) die folgende allgemeine Formel aufweist: 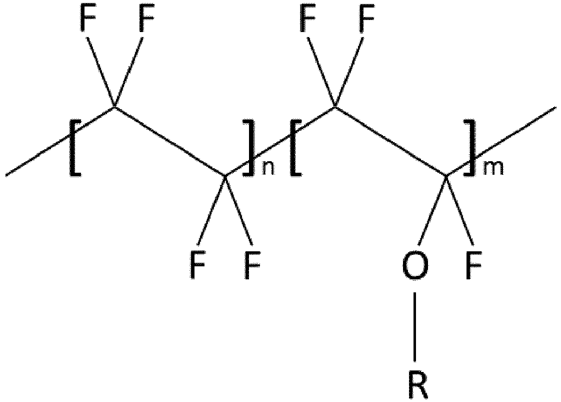 worin R ein C₁₋₄-Perfluoralkylrest und bevorzugt ein C₁₋₃-Perfluoralkylrest ist und m und n die Anzahl der Wiederholungseinheiten wiedergibt, wobei n und m bevorzugt unabhängig voneinander eine Zahl zwischen 1 und 10000 sind.

6. Verfahren nach zumindest einem der vorstehenden Ansprüche, **dadurch gekennzeichnet, dass** das Perfluoralkoxypolymer ii) einen gemäß der DIN EN ISO1133 mit 5 kg bei 372 °C gemessenen Schmelzflussindex von 1 bis 30 g/10 min und bevorzugt einen Schmelzflussindex von 2 bis 20 g/10 min aufweist.

7. Verfahren nach zumindest einem der vorstehenden Ansprüche, **dadurch gekennzeichnet, dass** das Perfluoralkoxypolymer ii) eine gemäß DIN ISO 13320 gemessene durchschnittliche Partikelgröße von 20 bis 650 µm und bevorzugt von 20 bis 50 µm aufweist.

8. Verfahren nach zumindest einem der vorstehenden Ansprüche, **dadurch gekennzeichnet, dass** es ein Kolbenring oder ein Packungsring ist.

9. Verfahren nach zumindest einem der vorstehenden Ansprüche, **dadurch gekennzeichnet, dass** das Formen und Sintern in dem Schritt b) i) durch Pressen der Zusammensetzung zu einem Grünling und anschließendes Sintern zu einem Rohformling, ii) durch Drucksintern oder iii) durch Extrusion zu einem Grünling und anschließendes Sintern zu einem Rohformling durchgeführt wird.

10. Dichtelement und/oder Führungsring erhältlich durch ein Verfahren nach einem der vorstehenden Ansprüche 1 bis 9.

11. Kolbenkompressor enthaltend wenigstens ein Dichtelement und/oder Führungsring nach Anspruch 10.

## Claims

1. A method of making a sealing element and/or guide ring comprising the steps of:
a) Providing a composition consisting of:
i) 50 to 98 wt.% polytetrafluoroethylene and/or chemically modified polytetrafluoroethylene,
ii) 1 to 49 wt.% perfluoroalkoxy polymer,
iii) 1 to 49 wt.% of an inorganic filler selected from the group consisting carbon, graphite, glass fibers, carbon fibers, molybdenum disulfide, metals, alloys, ceramic particles and any mixtures of two or more of the foregoing, and
iv) 0 to 25 wt.% of a polymer selected from the group consisting of polyphenylene sulfides (PPS), polyphenylene sulfones (PPSO2), polyether ether ketones (PEEK), polyimides, and any mixtures of two or more of the foregoing,
wherein the optionally included chemically modified polytetrafluoroethylene is a polymer composed of tetrafluoroethylene monomer and less than 1 wt.% comonomer, and wherein the perfluoroalkoxy polymer is a copolymer of tetrafluoroethylene and perfluoroalkoxy comonomer containing more than 1 wt.% perfluoroalkoxy comonomer;
b) Shaping and sintering the composition provided in step a) into a preform,
c) Mechanically processing the preform provided in step b) into the sealing element and/or guide ring.

2. The method according to claim 1, **characterized in that** the composition comprises copper or bronze as inorganic filler.

3. The method according to claim 1 or 2, **characterized in that** the polytetrafluoroethylene and/or chemically modified polytetrafluoroethylene i) has a number average molecular weight of 10⁶ g/mol or greater.

4. The method according to at least one of the preceding claims, **characterized in that** the polytetrafluoroethylene and/or chemically modified polytetrafluoroethylene i) has an average particle size, measured according to DIN ISO 13320, of 20 to 650 µm and preferably of 20 to 50 µm.

5. The method according to at least one of the preceding claims, **characterized in that** the perfluoroalkoxy polymer ii) has the following general formula: 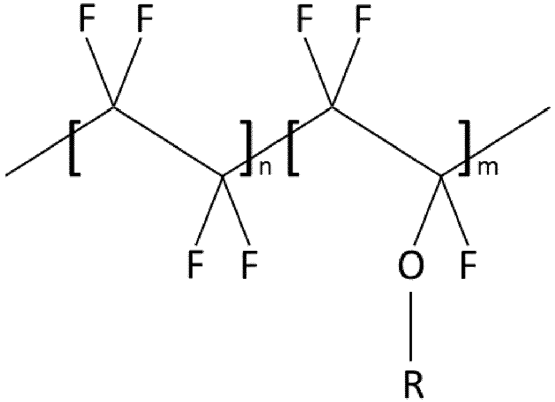 wherein R is a C₁₋₄ perfluoroalkyl and preferably C₁₋₃ perfluoroalkyl and m and n represent the number of repeat units, u and m preferably being independently a number between 1 and 10000.

6. The method according to at least one of the preceding claims, **characterized in that** the perfluoroalkoxy polymer ii) has a melt flow index of 1 to 30 g/10 min and preferably a melt flow index of 2 to 20 g/10 min, measured according to DIN EN ISO1133 with 5 kg at 372°C.

7. The method according to at least one of the preceding claims, **characterized in that** the perfluoroalkoxy polymer ii) has an average particle size, measured according to DIN ISO 13320, of 20 to 650 µm and preferably of 20 to 50 µm.

8. The method according to at least one of the preceding claims, **characterized in that** it is a piston ring or a packing ring.

9. The method according to at least one of the preceding claims, **characterized in that** the shaping and sintering in step b) is carried out i) by pressing the composition to a green body and subsequent sintering to a preform, ii) by pressure sintering, or iii) by extrusion to a green body and subsequent sintering to a preform.

10. A sealing element and/or guide ring obtainable by a method according to any one of the preceding claims 1 to 9.

11. A piston compressor containing at least one sealing element and/or guide ring according to claim 10.

## Revendications

1. Procédé de fabrication d'un élément d'étanchéité et/ou d'une bague de guidage comprenant les étapes suivantes:
a) Fournir une composition consistant en:
i) 50 à 98 % en poids de polytétrafluoroéthylène et/ou de polytétrafluoroéthylène chimiquement modifié,
ii) 1 à 49 % en poids de polymère perfluoroalcoxy,
iii) 1 à 49 % en poids d'une charge inorganique choisie dans le groupe constitué par le carbone, le graphite, les fibres de verre, les fibres de carbone, le bisulfure de molybdène, les métaux, les alliages, les particules de céramique et tout mélange de deux ou plusieurs des éléments précédents, et
iv) 0 à 25 % en poids d'un polymère choisi dans le groupe constitué par les polyphénylène sulfures (PPS), les polyphénylène sulfones (PPSO2), les polyéther éther cétones (PEEK), les polyimides, et tout mélange de deux ou plusieurs des précédents,
dans lequel le polytétrafluoroéthylène modifié chimiquement éventuellement inclus est un polymère composé de tétrafluoroéthylène monomère et de moins de 1 % en poids de comonomère, et dans lequel le polymère perfluoroalcoxy est un copolymère de tétrafluoroéthylène et de comonomère perfluoroalcoxy contenant plus de 1 % en poids de comonomère perfluoroalcoxy;
b) Mise en forme et frittage de la composition fournie à l'étape a) en une préforme,
c) Traitement mécanique de la préforme fournie à l'étape b) dans l'élément d'étanchéité et/ou la bague de guidage.

2. Procédé selon la revendication 1, **caractérisé en ce que** la composition comprend du cuivre ou du bronze comme charge inorganique.

3. Procédé selon la revendication 1 ou 2, **caractérisé en ce que** le polytétrafluoroéthylène et/ou le polytétrafluoroéthylène modifié chimiquement i) a un poids moléculaire moyen en nombre de 10⁶ g/mol ou plus.

4. Procédé selon au moins une des revendications précédentes, **caractérisé en ce que** le polytétrafluoroéthylène et/ou le polytétrafluoroéthylène chimiquement modifié i) a une taille moyenne de particules, mesurée selon la norme DIN ISO 13320, de 20 à 650 µm et de préférence de 20 à 50 µm.

5. Procédé selon au moins une des revendications précédentes, **caractérisé en ce que** le polymère perfluoroalkoxy ii) a la formule générale suivante: 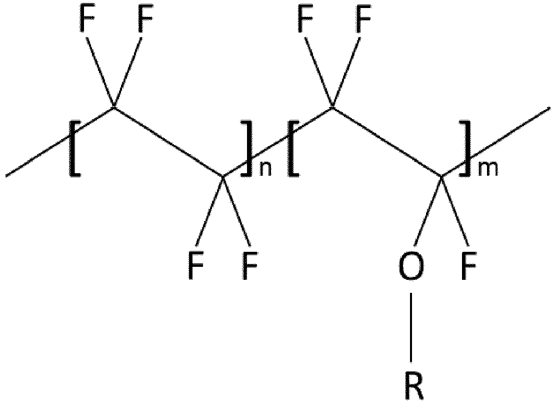 dans laquelle R est un perfluoroalkyle en C₁₋₄ et de préférence un perfluoroalkyle en C₁₋₃ et m et n représentent le nombre d'unités de répétition, u et m étant de préférence indépendamment un nombre compris entre 1 et 10000.

6. Procédé selon au moins une des revendications précédentes, **caractérisé en ce que** le polymère perfluoroalcoxy ii) a un indice de fluidité de 1 à 30 g/10 min et de préférence un indice de fluidité de 2 à 20 g/10 min, mesuré selon DIN EN ISO1133 avec 5 kg à 372°C.

7. Procédé selon au moins une des revendications précédentes, **caractérisé en ce que** le polymère perfluoroalcoxy ii) a une taille moyenne de particule, mesurée selon la norme DIN ISO 13320, de 20 à 650 µm et de préférence de 20 à 50 µm.

8. Procédé selon au moins une des revendications précédentes, **caractérisé en ce qu'**il s'agit d'un segment de piston ou d'un segment de garniture.

9. Procédé selon au moins une des revendications précédentes, **caractérisé en ce que** la mise en forme et le frittage à l'étape b) sont effectués i) par pressage de la composition en un corps vert et frittage ultérieur en une préforme, ii) par frittage sous pression, ou iii) par extrusion en un corps vert et frittage ultérieur en une préforme.

10. Elément d'étanchéité et/ou bague de guidage pouvant être obtenu par un procédé selon l'une quelconque des revendications précédentes 1 à 9.

11. Compresseur à piston contenant au moins un élément d'étanchéité et/ou une bague de guidage selon la revendication 10.
